# EUROPEAN PATENT APPLICATION

(11) **EP 4 556 135 A1**
(43) Date of publication of application: **21.05.2025**
(21) Application number: 24178039.4
(22) Date of filing: 24.05.2024
(51) Int. Cl.: B21H 3/06, F16C 7/06

(54) **AN ADJUSTMENT DEVICE OF A THREAD ROLLING MACHINE**

(71) Applicant: Hsiao, Chun-Yu, Kaohsiung City 82147 (TW)
(72) Inventor: HSIAO, MING-YI, 82147 Kaohsiung City (TW)
(74) Representative: Cabinet Chaillot

(57) **Abstract**

An adjustment device (4) is connected to a transmission device (33) of a thread rolling machine (3). The transmission device (33) includes an eccentric wheel (332) and a transmission shaft (333). The adjustment device (4) includes a drive assemblage (42) and a worm assemblage (43) linked with the transmission shaft (333). The worm assemblage (43) includes a worm shaft (431) meshed with the drive assemblage (42) and a regulating unit (433) disposed on the worm shaft (431). The drive assemblage (42) includes a first drive unit (421) disposed on a first shaft end (333A) of the transmission shaft (333) and defining a positioning portion (422) whose center is situated away from a center of the first drive unit (421) to present an eccentric arrangement. Accordingly, the cooperation between the drive assemblage (42) and the worm assemblage (43) allows a thread-rolling distance applied to the thread rolling machine (3) to be easily and precisely adjusted.

## Description

### BACKGROUND OF THE INVENTION

### 1. Field of the Invention

This invention relates to a thread rolling machine and relates particularly to an adjustment device of a thread rolling machine.

### 2. Description of the Related Art

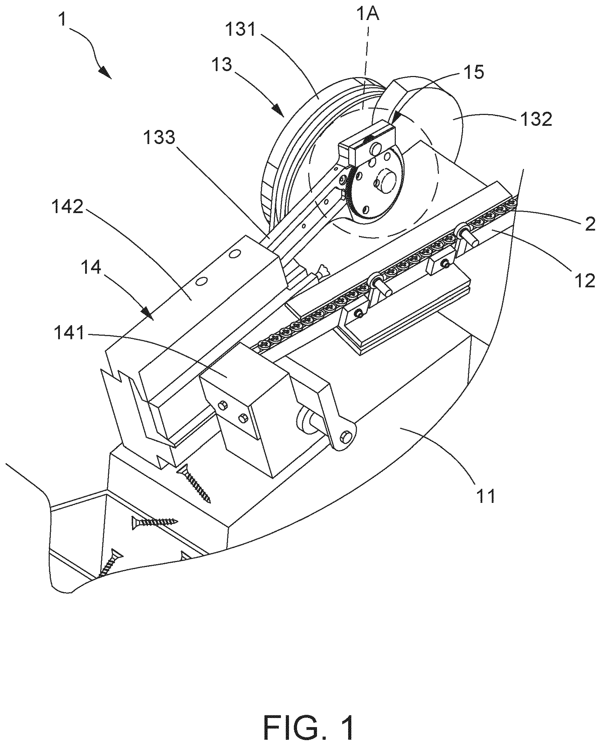

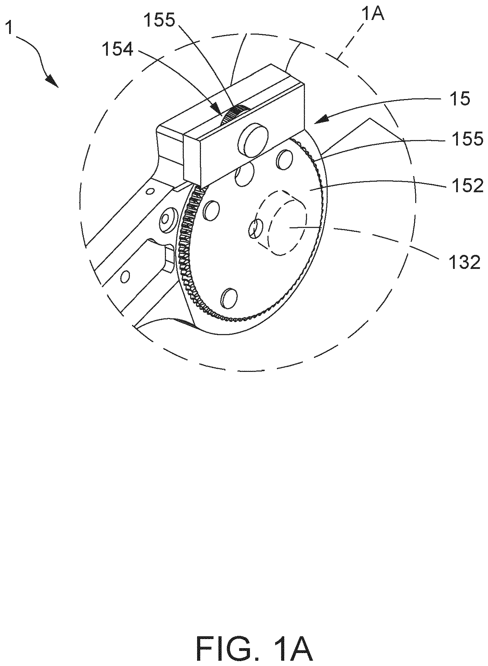

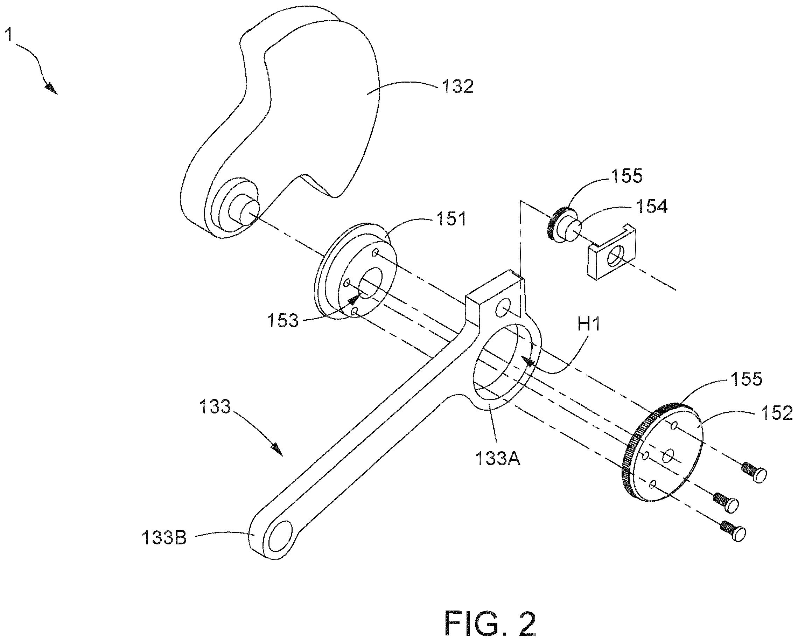

Referring to Figs. **1****,** **1A****,** and **2****,** a conventional thread rolling machine **1** comprises a base **11,** a feeding track **12** and a transmission device **13** respectively installed on the base **11,** a thread rolling device **14** driven by the transmission device **13,** and a regulating assemblage **15** installed on the transmission device **13.** The transmission device **13** has a transmission wheel **131** installed on the base **11,** an eccentric wheel **132** linked with the transmission wheel **131,** and a transmission shaft **133** linked with the eccentric wheel **132.** The transmission shaft **133** has a first shaft end **133A** connected to the eccentric wheel **132,** a second shaft end **133B** connected to the thread rolling device **14,** and a through hole **H1** formed through the first shaft end **133A.** The regulating assemblage **15** has a first regulating unit **151** mounted on the first shaft end **133A,** a second regulating unit **152** disposed beside the first shaft end **133A** and engaged with the first regulating unit **151,** an opening **153** formed through the first regulating unit **151,** and a third regulating unit **154** meshed with the second regulating unit **152.** A center of the opening **153** is formed away from a center of the first regulating unit 151 so that the eccentric wheel **132** is eccentrically installed when the eccentric wheel **132** is inserted into the opening **153** and engaged with the first regulating unit **151.** The thread rolling device **14** has a first die unit **141** installed on the base **11** and a second die unit **142** facing the first die unit **141** and connected to the second shaft end **133B** of the transmission shaft **133.**

During a thread-rolling operation of the thread rolling machine **1,** the feeding track **12** is adapted to deliver a plurality of workpieces **2.** Simultaneously, a rotation of the eccentric wheel **132** is carried out by a rotation of the transmission wheel **131** so that the transmission shaft **133** is driven by the rotation of the eccentric wheel **132** to thereby attain a forward and backward movement. The second die unit **142** is synchronously driven by the transmission shaft **133** to slide along the first die unit **141** so that each workpiece **2** is rolled by the first die unit **141** and the second die unit **142** to form a plurality of threads (not shown) correspondingly. Thus, the thread-rolling operation is completed.

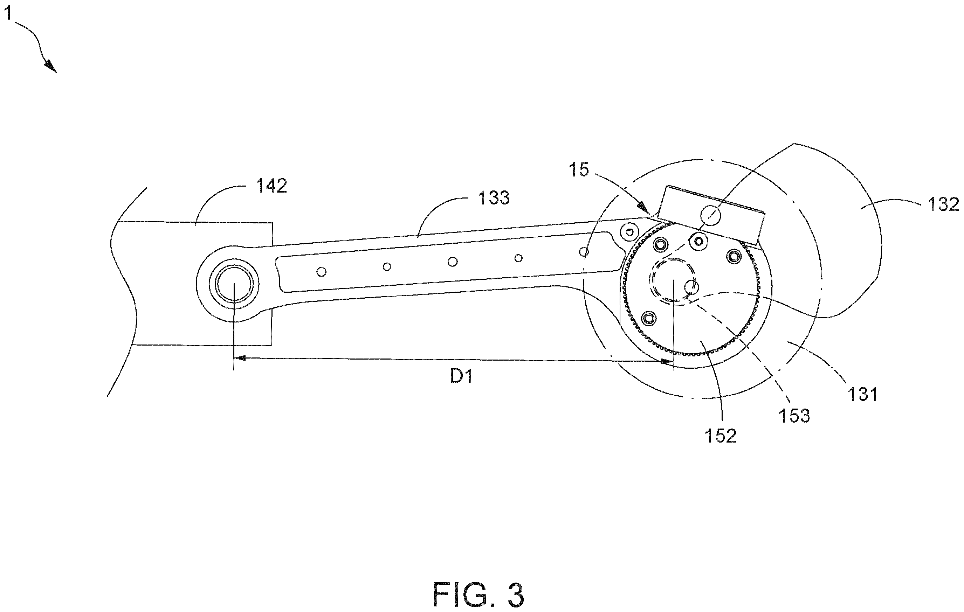

Referring to Figs. **1****,** **2** and **3****,** before the thread-rolling operation is conducted by the thread rolling machine **1,** a thread-rolling distance applied to the thread rolling machine **1** should be adjusted according to the size of different workpieces **2** so that each workpiece **2** can be processed precisely. First, the third regulating unit **154** is rotated to carry out a rotation of the second regulating unit **152.**

The first regulating unit **151** is synchronously driven by the rotation of the second regulating unit **152** to be rotated, thereby changing a position of the opening **153** and thence changing a distance **D1** defined between the second die unit **142** and the opening **153.** When the distance **D1** is extended, the thread-rolling distance is shortened so that the workpiece **2** is rolled for a shorter time between the first die unit **141** and the second die unit **142.** On the contrary, When the distance **D1** is shortened, the thread-rolling distance is extended so that the workpiece **2** is rolled for a longer time between the first die unit **141** and the second die unit **142,** thereby executing the thread-rolling operation properly according to different workpieces **2.**

However, an outer diameter of the third regulating unit **154** is much smaller than an outer diameter of the second regulating unit **152,** and therefore a larger force should be applied to the third regulating unit **154** in order to carry out the rotation of the second regulating unit **152** through the third regulating unit **154,** and that is laborious and inconvenient. Further, the third regulating unit **154** and the second regulating unit **152** are meshed to each other through a plurality of threaded units **155.** If the threaded units **155** disposed on the third regulating unit **154** are smaller than the threaded units **155** disposed on the second regulating unit **152,** the third regulating unit **154** may not be capable of carrying out the rotation of the second regulating unit **152** because the strength of the threaded units **155** of the third regulating unit **154** is not enough for bearing the force.

In order to maintain the strength of the threaded units **155** of the third regulating unit **154,** the volume of the threaded units **155** is increased, and that restricts the number of the threaded units **155** because of the small outer diameter of the third regulating unit **154.** Meanwhile, it is also difficult to adjust the thread-rolling distance applied to the thread rolling machine **1** easily and precisely, and that requires to be improved.

### SUMMARY OF THE INVENTION

The object of this invention is to provide an adjustment device of a thread rolling machine capable of adjusting a thread-rolling distance applied to the thread rolling machine easily and precisely.

The adjustment device is installed on the thread rolling machine. The thread rolling machine includes a base, a feeding track and a transmission device respectively installed on the base, and a thread rolling device connected to the transmission device. The transmission device has a transmission wheel installed on the base, an eccentric wheel linked with the transmission wheel, and a transmission shaft linked with the eccentric wheel. The transmission shaft has a first shaft end connected to the eccentric wheel, a through hole formed through the first shaft end, and a second shaft end connected to the thread rolling device. The thread rolling device has a first die unit installed on the base and a second die unit connected to the second shaft end of the transmission shaft and facing the first die unit. The adjustment device of this invention comprises a housing installed on the first shaft end, a drive assemblage installed on the first shaft end, and a worm assemblage installed on the housing. The worm assemblage has a worm shaft installed on the housing and meshed with the drive assemblage, an engagement portion installed on an outer periphery of the worm shaft, and a regulating unit rotatably installed on the worm shaft. The drive assemblage has a first drive unit installed on one side of the first shaft end, a positioning portion defined on the first drive unit, a second drive unit installed on another side of the first shaft end, and a linking portion meshed with the engagement portion. The first drive unit and the second drive unit are situated beside and engaged to each other. The eccentric wheel is engaged with the positioning portion while the positioning portion is accommodated in the through hole of the first shaft end. A center of the positioning portion is situated away from a center of the first drive unit, thereby presenting an eccentric arrangement of the eccentric wheel. Thus, the regulating unit is adapted to adjust a rotation of the worm shaft so that a rotation of the drive assemblage is driven by the rotation of the worm shaft, and thus a position of the positioning portion within the through hole is changed, thereby adjusting a distance defined between the second die unit and the positioning portion easily and precisely so that the thread-rolling distance is adjusted correspondingly in order to process workpieces with different sizes properly. The worm shaft and the regulating unit facilitate a slight rotation of the drive assemblage, thereby achieving a slight and precise adjustment in the thread-rolling distance and saving the effort for executing the adjustment.

Preferably, the linking portion is disposed on an outer periphery of the second drive unit.

Preferably, the linking portion is disposed on an outer periphery of the first drive unit.

Preferably, a bearing unit is disposed between the positioning portion and the eccentric wheel.

Preferably, the first drive unit is fastened to the second drive unit by using a plurality of fastening units.

Preferably, at least one connecting unit is disposed between the first drive unit and the second drive unit, thereby achieving a synchronous rotation of the first drive unit and the second drive unit.

Preferably, the connecting unit is a rivet.

### BRIEF DESCRIPTION OF THE DRAWINGS

- Fig. **1**: is a schematic view showing a conventional thread rolling machine;
- Fig. **1A**: is an enlarged view of the encircled portion 1A indicated in Fig. 1;
- Fig. **2**: is an exploded view showing partial elements of the conventional thread rolling machine;
- Fig. **3**: is a schematic view showing an adjusting operation of the conventional thread rolling machine;
- Fig. **4**: is a perspective view showing a first preferred embodiment of this invention;
- Fig. **4A**: is an enlarged view of the encircled portion 4A indicated in Fig. 4;
- Fig. **5**: is an exploded view showing the first preferred embodiment of this invention;
- Figs. **6-7**: are schematic views showing an adjusting operation of the first preferred embodiment of this invention;
- Fig. **8**: is an exploded view showing a second preferred embodiment of this invention characterized in that the linking portion is disposed on the first drive unit;
- Figs. **9-10**: are schematic views showing an adjusting operation of the second preferred embodiment of this invention; and
- Fig. **11**: is a schematic view showing a third preferred embodiment of this invention characterized in that at least one connecting unit is disposed between the first drive unit and the second drive unit.

### DETAILED DESCRIPTION OF THE PREFERRED EMBODIMENTS

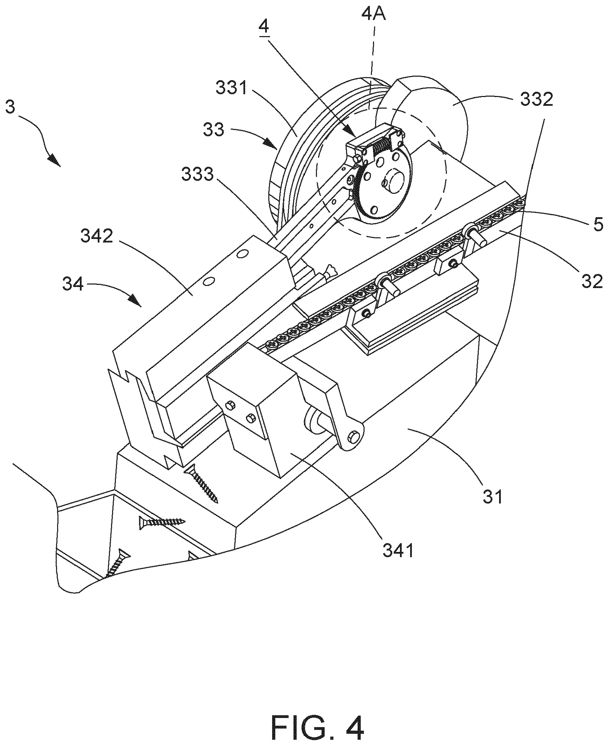

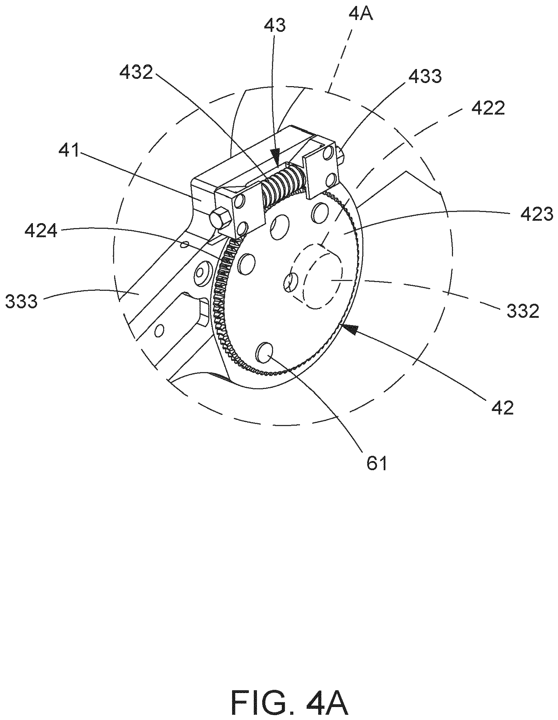

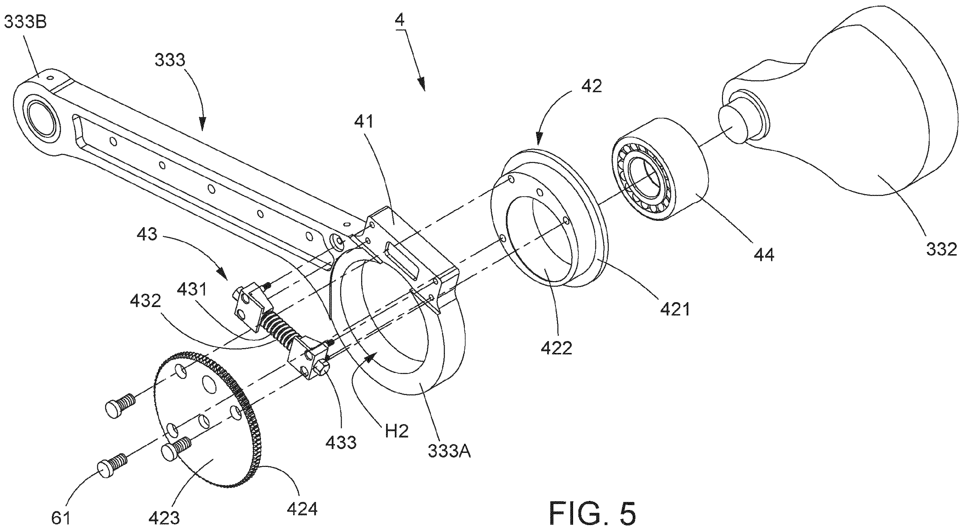

Referring to Figs. **4**, **4A** and **5**, a first preferred embodiment of an adjustment device **4** of a thread rolling machine **3** of this invention is disclosed. The adjustment device **4** is disposed on the thread rolling machine **3.** The thread rolling machine **3** comprises a base **31,** a feeding track **32** installed on the base **31** and adapted to deliver a plurality of workpieces **5,** a transmission device **33** installed on the base **31** and relative to the feeding track **32,** and a thread rolling device **34** connected to and driven by the transmission device **33.** The adjustment device **4** is connected to the transmission device **33.** The transmission device **33** includes a transmission wheel **331** disposed on the base **31,** an eccentric wheel **332** linked with the transmission wheel **331,** and a transmission shaft **333** linked with the eccentric wheel **332.** The transmission shaft **333** has a first shaft end **333A** connected to the eccentric wheel **332,** a through hole **H2** formed through the first shaft end **333A,** and a second shaft end **333B** connected to the thread rolling device **34.** The first shaft end **333A** and the second shaft end **333B** are opposite to each other. The thread rolling device **34** includes a first die unit **341** disposed on the base **31** and a second die unit **342** facing the first die unit **341.** The second die unit **342** is connected to the second shaft end **333B** of the transmission shaft **333** so that the second die unit **342** is driven by the transmission shaft **333** to thereby movably slide along the first die unit **341.**

Referring to Figs. **4A** and **5**, the adjustment device **4** includes a housing **41** mounted on the first shaft end **333A** of the transmission shaft **333,** a drive assemblage **42** installed on the first shaft end **333A** of the transmission shaft **333,** and a worm assemblage **43** installed on the housing **41** and relative to the drive assemblage **42** so that the worm assemblage **43** is capable of controlling a rotation of the drive assemblage **42.** The worm assemblage **43** has a worm shaft **431** disposed on the housing **41** and meshed with the drive assemblage **42,** an engagement portion **432** formed along an outer periphery of the worm shaft **431,** and a regulating unit **433** extending outwards from one side of the worm shaft **431** and rotatably installed on the worm shaft **431.** The regulating unit **433** can be disposed on both sides of the worm shaft **431** according to needs. The regulating unit **433** is adapted to adjust and control a rotation of the worm shaft **431.** The drive assemblage **42** has a first drive unit **421** installed on the first shaft end **333A** of the transmission shaft **333,** a positioning portion **422** defined on the first drive unit **421** and engaged with the eccentric wheel **332,** a second drive unit **423** installed beside the first shaft end **333A** of the transmission shaft **333** and facing the first drive unit **421,** and a linking portion **424** formed along an outer periphery of the second drive unit **423** and meshed with the engagement portion **432.** In this preferred embodiment, the first drive unit **421** is fixed to the second drive unit **423** by using a plurality of fastening units **61.** The fastening units **61** penetrate through the second drive unit **423** to be engaged with the first drive unit **421** so that the second drive unit **423** is pressed and tightened by the fastening units **61,** thereby achieving a tight engagement of the first drive unit **421** and the second drive unit **423.** A center of the positioning portion **422** is situated away from a center of the first drive unit **421** so that the eccentric wheel **332** is eccentrically installed. The positioning portion **422** is accommodated in the through hole **H2** of the first shaft end **333A.** Thus, a distance **D2** defined between the second die unit **342** and the positioning portion **422** can be adjusted through a rotation of the first drive unit **421** carried out by the worm assemblage **43.** In this preferred embodiment, a bearing unit **44** is disposed between the positioning portion **422** and the eccentric wheel **332,** thereby preventing the improper friction caused between the positioning portion **422** and the eccentric wheel **332.**

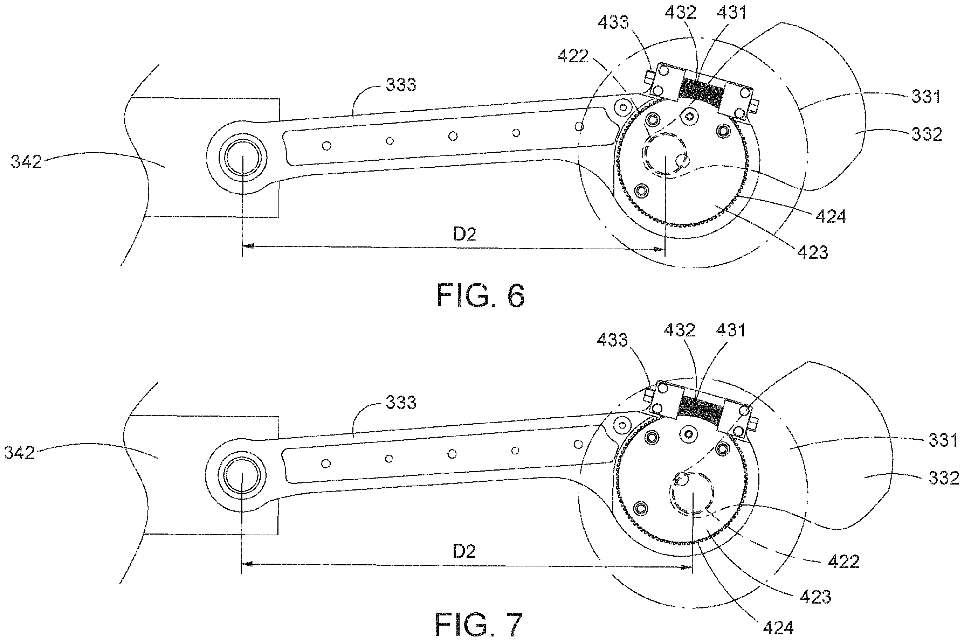

Referring to Figs. **5****,** **6** and **7****,** before a thread-rolling operation is conducted by the thread rolling machine **3,** an adjusting operation for regulating the distance **D2** between the second die unit **342** and the positioning portion **422** should be executed according to the size of the workpieces **5** aimed to be processed, thereby changing the thread-rolling distance applied to the thread rolling machine **3.** The thread-rolling distance is a distance defined when each workpiece **5** is carried by the second die unit **342** to be rolled between the first die unit **341** and the second die unit **342.** Because the first drive unit **421** and the second drive unit **423** are tightly fastened through the fastening units **61** to allow the transmission shaft **333** to be fixed between the first drive unit **421** and the second drive unit **423,** the fastening units **61** should be loosened slightly in order to executing the adjusting operation, namely to extend or shorten the thread-rolling distance. When the fastening units **61** are loosened, the fastening units **61** are still engaged with the first drive unit **421.** Meanwhile, the second drive unit **423** which is situated between the fastening units **61** and the first drive unit **421** is not tightened by the fastening units **61** so that the second drive unit **423** is rotatable. Thus, the first drive unit **421** and the second drive unit **423** are not fixed to the transmission shaft **333** and capable of being rotated. After that, through rotating the regulating unit **433,** the worm shaft **431** is driven to be rotated. A rotation of the second drive unit **423** is then carried out by the rotation of the worm shaft **431** owing to the engagement of the engagement portion **432** and the linking portion **424.** Meanwhile, the first drive unit **421** is synchronously rotated under the rotation of the second drive unit **423** because the rotation of the first drive unit **421** allows the first drive unit **421** to push the fastening units **61** so that the second drive unit **423** is driven by the first drive unit **421** through the fastening units **61.** Thus, a position of the positioning portion **422** within the through hole **H2** is changed, thereby changing the distance **D2** between the second die unit **342** and the positioning portion **422** and further changing the thread-rolling distance applied to the thread rolling machine **3.** When the distance **D2** is shortened, the thread-rolling distance is extended so that the workpiece **5** is rolled for a longer time between the first die unit **341** and the second die unit **342,** and that is preferable for processing the workpieces **5** which are provided with a larger outer diameter.

On the contrary, when the distance **D2** is extended, the thread-rolling distance is shortened so that the workpiece **5** is rolled for a shorter time between the first die unit **341** and the second die unit **342,** and that is preferable for processing the workpieces **5** which are provided with a smaller outer diameter. Thus, the adjusting operation is conducted by rotating the regulating unit **433** to thereby achieve the cooperation between the drive assemblage **42** and the worm assemblage **43,** and that saves the effort for executing the adjusting operation. Meanwhile, the worm shaft **431** and the engagement portion **432** can bear the force caused during the adjusting operation effectively and facilitate a slight rotation of the second and the first drive units **423, 421,** thereby achieving a slight and precise adjustment in the distance **D2** and the thread-rolling distance.

After the adjusting operation is completed, the fastening units **61** are fastened tightly so that the second and the first drive units **423, 421** are fixed to the transmission shaft **333.** Namely, the second and the first drive units **423, 421** are fixed and immovable. Then, the eccentric wheel **332** is driven by the transmission wheel **331** to be rotated. The rotation of the eccentric wheel **332** then carries out the reciprocating forward and backward movement of the transmission shaft **333** so that the second die unit **342** is driven by the transmission shaft **333** to slide along the first die unit **341.** Meanwhile, each workpiece **5** is delivered and situated between the first die unit **341** and the second die unit **342** along the feeding track **32,** and then rolled by the first die unit **341** and the second die unit **342** to form a plurality of threads (not shown). Thus, the thread-rolling operation is completed.

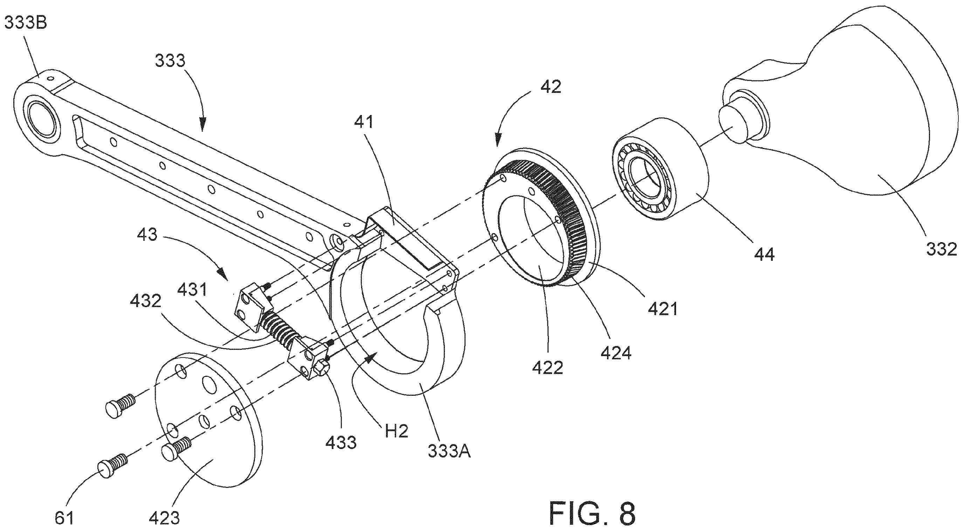

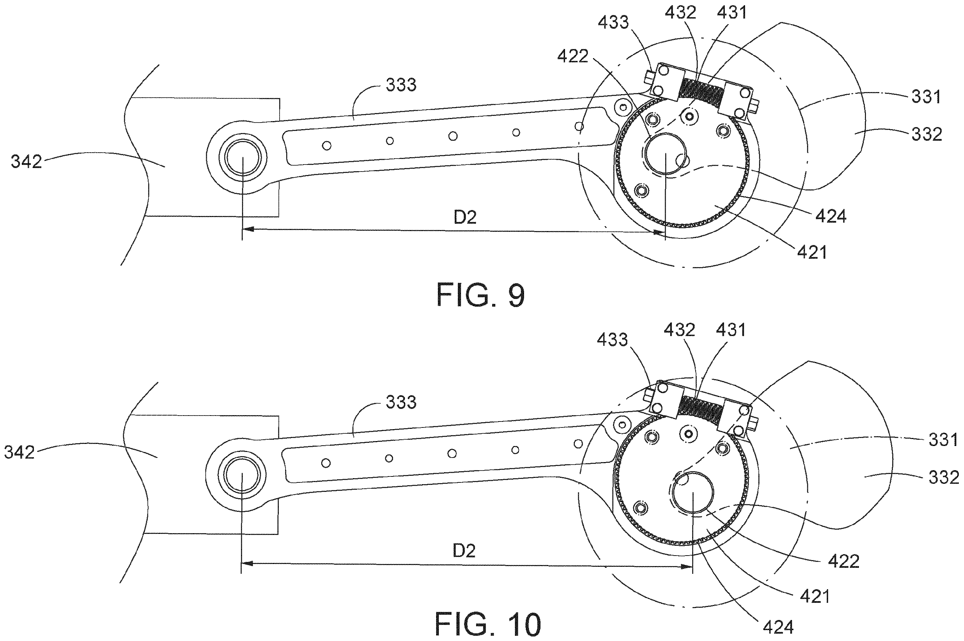

Referring to Figs. **8****,** **9** and **10** show a second preferred embodiment of the adjustment device **4** of this invention. The correlated elements and the concatenation of elements, the operation and objectives of the second preferred embodiment are the same as those of the first preferred embodiment. This embodiment is characterized in that the linking portion **424** is formed along an outer periphery of the first drive unit **421.** The worm shaft **431** is disposed within the housing **41** so that the engagement portion **432** formed on the worm shaft **431** is meshed with the linking portion **424** formed on the first drive unit **421.** Thus, after the fastening units **61** are slightly released to allow the first and the second drive units **421, 423** to be rotatable, the rotation of the worm shaft **431** is carried out by rotating the regulating unit **433** whereby the first drive unit **421** is driven to be rotated under the rotation of the worm shaft **431** owing to the engagement of the engagement portion **432** and the linking portion **424,** thereby changing the position of the positioning portion **422** within the through hole **H2** and thence changing the distance **D2** between the second die unit **342** and the positioning portion **422.** Hence, the thread-rolling distance applied to the thread rolling machine **3** is adjusted precisely and properly. Because the first drive unit **421** is driven by the worm assemblage **43** directly, the adjusting operation is also simplified.

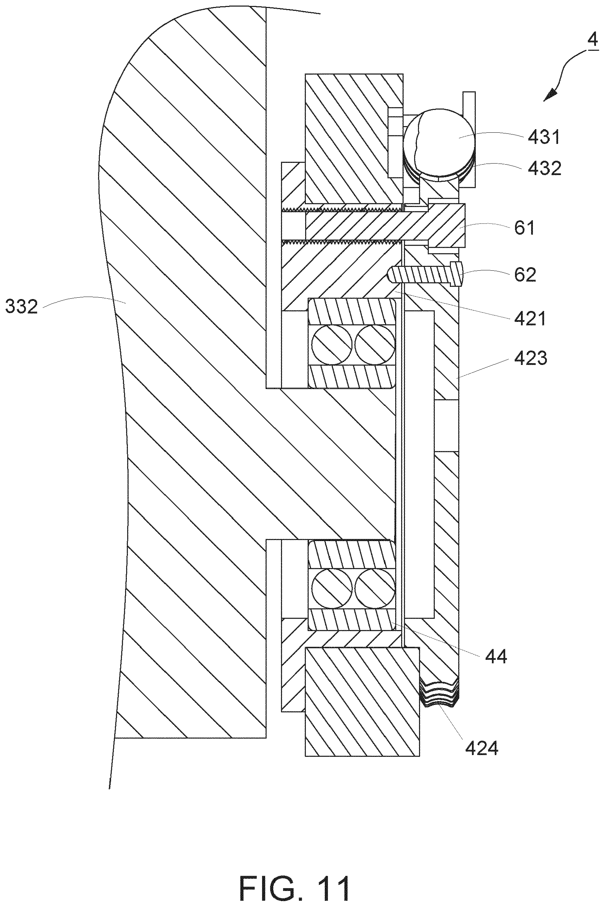

Referring to Fig. **11** shows a third preferred embodiment of the adjustment device **4** of this invention. The correlated elements and the concatenation of elements, the operation and objectives of the third preferred embodiment are the same as those of the first preferred embodiment. This embodiment is characterized in that at least one connecting unit **62** is installed between the first drive unit **421** and the second drive unit **423.** The connecting unit **62** is respectively connected to the first drive unit **421** and the second drive unit **423** so that the first drive unit **421** and the second drive unit **423** are capable of being synchronously rotated. Here takes an example that the connecting unit **62** is a rivet. Thus, after the fastening units **61** are slightly loosened to allow the first and the second drive units **421, 423** to be rotatable, the worm shaft **431** is rotated under a rotation of the regulating unit **433** (not shown) to further carry out a rotation of the second drive unit **423.** Owing to the connecting unit **62,** the first drive unit **421** is driven immediately by the second drive unit **423** to be rotated whereby the rotation of the first drive unit **421** is carried out without delay. Further, because the rotation of the first drive unit **421** is not carried out by pressing the fastening units **61,** a tolerance for processing holes (not shown) of the second drive unit **423** that are adapted for the insertion of the fastening units **61** is increased, thereby saving the time and costs for manufacturing the second drive unit **423.**

To sum up, the adjustment device of this invention takes advantages that the worm assemblage has the worm shaft, the regulating unit adapted to control the worm shaft, and the engagement portion disposed on the worm shaft. The drive assemblage has the first drive unit defining the positioning portion which is engaged with the eccentric wheel, the second drive unit engaged with the first drive unit, and the linking portion meshed with the engagement portion. The center of the positioning portion is away from the center of the first drive unit so that the eccentric wheel is eccentrically disposed. Thus, the worm shaft is rotated under a rotation of the regulating unit. The drive assemblage is then driven by the rotation of the worm shaft to be rotated, thereby changing the position of the positioning portion and adjusting the distance defined between the second die unit and the positioning portion whereby the thread-rolling distance applied to the thread rolling machine is adjusted easily and precisely in order to process the workpieces with different sizes properly.

While the embodiments of this invention are shown and described, it is understood that further variations and modifications may be made without departing from the scope of this invention.

## Claims

1. An adjustment device (4) of a thread rolling machine (3), said adjustment device (4) being installed on said thread rolling machine (3), said thread rolling machine (3) comprising a base (31), a feeding track (32) and a transmission device (33) respectively disposed on said base (31), and a thread rolling device (34) driven by said transmission device (33), said adjustment device (4) being connected to said transmission device (33), wherein said transmission device (33) includes a transmission wheel (331) disposed on said base (31), an eccentric wheel (332) linked with said transmission wheel (331), and a transmission shaft (333) linked with said eccentric wheel (332) and having opposite first and second shaft ends (333A, 333B), with a through hole (H2) formed through said first shaft end (333A), said thread rolling device (34) including a first die unit (341) disposed on said base (31) and a second die unit (342) facing said first die unit (341) and connected to said second shaft end (333B) of said transmission shaft (333) ;
**characterized in that** said adjustment device (4) includes a housing (41) disposed on said first shaft end (333A) of said transmission shaft (333), a drive assemblage (42) disposed on said first shaft end (333A) of said transmission shaft (333), and a worm assemblage (43) disposed on said housing (41) and adapted to adjust a rotation of said drive assemblage (42), said worm assemblage (43) including a worm shaft (431) disposed on said housing (41) and meshed with said drive assemblage (42), an engagement portion (432) disposed on an outer periphery of said worm shaft (431), and a regulating unit (433) rotatably disposed on one side of said worm shaft (431) so that a rotation of said worm shaft (431) is driven by a rotation of said regulating unit (433), said drive assemblage (42) including a first drive unit (421) mounted on said first shaft end (333A) and defining a positioning portion (422) engaged with said eccentric wheel (332), a second drive unit (423) disposed beside said first shaft end (333A) and engaged with said first drive unit (421), and a linking portion (424) meshed with said engagement portion (432), a center of said positioning portion (422) being away from a center of said first drive unit (421) so that said eccentric wheel (332) is eccentrically disposed, said positioning portion (422) being accommodated in said through hole (H2) of said first shaft end (333A), said worm shaft (431) being rotated under said rotation of said regulating unit (433) to carry out said rotation of said drive assemblage (42), thereby changing a position of said positioning portion (422) within said through hole (H2) and thence adjusting a distance (D2) defined between said second die unit (342) and said positioning portion (422).

2. The adjustment device (4) according to claim 1, wherein said linking portion (424) is disposed on an outer periphery of said second drive unit (423) .

3. The adjustment device (4) according to claim 1, wherein said linking portion (424) is disposed on an outer periphery of said first drive unit (421) .

4. The adjustment device (4) according to any one of claims 1 to 3, wherein a bearing unit (44) is disposed between said positioning portion (422) and said eccentric wheel (332).

5. The adjustment device (4) according to any one of claims 1 to 4, wherein said first drive unit (421) is fastened to said second drive unit (423) by using a plurality of fastening units (61).

6. The adjustment device (4) according to any one of claims 1 to 5, wherein at least one connecting unit (62) is disposed between said first drive unit (421) and said second drive unit (423), thereby achieving a synchronous rotation of said first drive unit (421) and said second drive unit (423).

7. The adjustment device (4) according to claim 6, wherein said at least one connecting unit (62) is a rivet.
